# EUROPÄISCHE PATENTSCHRIFT

(11) **EP 1 860 315 B1**
(45) Veröffentlichungstag und Bekanntmachung des Hinweises auf die Patenterteilung: **27.07.2011**
(21) Anmeldenummer: 07107388.6
(22) Anmeldetag: 03.05.2007
(51) Int. Cl.: F02M 25/07, F16K 15/18, F16K 31/126

(54) **Kraftfahrzeugventil**
Motor vehicle valve
Soupape de véhicule automobile

(30) Priorität: 26.05.2006 DE 102006024728
(43) Veröffentlichungstag der Anmeldung: 28.11.2007
(73) Patentinhaber: Pierburg GmbH, 41460 Neuss (DE)
(72) Erfinder: Celik, Halim, 50354 Hürth (DE)
(74) Vertreter: Patentanwälte ter Smitten

(56) Entgegenhaltungen:
- EP-A- 1 369 559
- DE-A1- 2 814 339
- DE-A1- 3 844 453
- DE-A1- 10 202 031
- DE-U1- 9 415 251
- FR-A- 1 207 058
- JP-A- 63 013 974
- US-A- 5 893 389

## Beschreibung

Die Erfindung betrifft ein Kraftfahrzeug-Abgasrückführ- oder Sekundärluft-Ventil als ein abschaltbares Rückschlagventil.

Derartige Ventile weisen einen in einem Ventilgehäuse angeordneten Ventilkörper auf. Der bewegbare, insbesondere verschiebbare Ventilkörper liegt in Geschlossen-Stellung an einem Ventilsitz an und verschließt eine Ventilöffnung. Das Bewegen des Ventilkörpers kann beispielsweise durch Unterdruck geschehen, wobei der Ventilkörper über einen Stößel mit einem in einer Unterdruckkammer angeordneten tellerförmigen Element verbunden ist. Durch die Erzeugung von Unterdruck in der Unterdruckkammer erfolgt ein Bewegen des Stößels und somit des mit dem Stößel verbundenen Ventilkörpers. Ferner ist es möglich, den Ventilkörper mit Hilfe eines Elektromagnetes zu bewegen. Hierbei ist der Ventilkörper über eine Stange oder einen Stößel mit einem Elektromagneten verbunden, wobei durch Schalten des Elektromagneten ein Verschieben des Stößels und somit des mit dem Stößel verbundenen Ventilkörpers erfolgt. Aufgrund von Abgaskondensat, Wasser oder anderen Ablagerungen, kann es, insbesondere wenn der Ventilkörper über einen längeren Zeitraum an dem Ventilsitz anliegt, zu einem Anhaften des Ventilkörpers an dem Ventilsitz kommen. Dies führt dazu, dass zum Öffnen des Ventils eine erhöhte Kraft erforderlich ist und somit das Regeln des Ventils beeinträchtigt ist. Ferner kann ein Klemmen des Ventils oder ein Beschädigen des Ventilsitzes und/oder des Ventilkörpers auftreten.

Aus EP 1 369 559 A2 ist ein Sekundärluftventil, bei dem ein Dichtelement und ein zusätzliches schaltbares Verschlusselement vorgesehen sind, das in der Abschalt-Stellung die Ventilöffnung verschließt.

Auch aus DE 94 15 251 U und EP 13 69 559 A2 sind pneumatisch geschaltete Sekundärluftventile bekannt, bei denen ein Dichtelement und ein zusätzliches schaltbares Verschlusselement vorgesehen sind, das in der Abschaltposition die Ventilöffnung vollstandig verschließt.

Aus DE 38 44 453 A1 ist ein Tankentlüftungsventil bekannt, bei dem der steuerbare Ventilkörper berührungslos durch einen Elektromagneten geschaltet wird.

Vor diesem Hintergrund ist es Aufgabe der Erfindung, ein abschaltbares Rückschlagventil für die Steuerung der Abgasrückführung oder der Sekundärluft zu schaffen, das eine hohe Betriebssicherheit aufweist.

Die Lösung der Aufgabe erfolgt erfindungsgemäß durch die Merkmale des Anspruchs 1.

Erfindungsgemäß weist der Ventilssitz ein Dichtelement auf. Das Dichtelement weist eine an dem Ventilkörper anliegende erste Dichtlippe auf. In Geschlossen-Stellung liegt der Ventilkörper somit nicht flächig an einem Ventilssitz sondern nur linienförmig an der ersten Dichtlippe an. Die Gefahr des Anhaftens des Ventilkörpers an dem Ventilsitz bzw. dem Dichtelement des Ventilsitzes ist somit erheblich verringert. Hierbei ist in bevorzugter Ausführungsform das Dichtelement Teil des Ventilssitzes oder einstückig mit dem Ventilsitz ausgebildet, so dass das Dichtelement selbst den Ventilsitz bildet. Ebenso kann das Dichtelement mit dem Ventilkörper verbunden sein, wobei sodann die erste Dichtlippe des Dichtelements in Geschlossen-Stellung an dem Ventilsitz anliegt.

Die erste Dichtlippe ist vorzugsweise in sich geschlossen und liegt somit in Geschlossen-Stellung des Ventils rahmenförmig an dem Ventilkörper, insbesondere in dessen Außenbereich an. Bei einem scheibenförmigen Ventilkörper ist die erste Dichtlippe vorzugsweise kreisringförmig ausgebildet.

Es ist ein Zusatzdichtelement vorgesehen. Mit Hilfe des Zusatzdichtelements erfolgt ein Abdichten des Ventilkörpers in dessen Innenbereich. Das Zusatzdichtelement weist vorzugsweise ebenfalls eine vierte Dichtlippe auf, die an dem Ventilkörper dichtend anliegt. Diese ist vorzugsweise ebenfalls rahmenförmig, insbesondere kreisringförmig ausgebildet. Insbesondere, wenn zur Betätigung des Ventilkörpers dieser mit einem stab- oder stößelförmigen Betätigungselement verbunden ist, ist es bevorzugt, dass das Zusatzdichtelement das Betätigungselement umgibt und hierzu insbesondere ringförmig ausgebildet ist. Das Vorsehen einer derartigen vierten Dichtlippe an dem Zusatzdichtelement hat in der bevorzugten Ausführungsform erfindungsgemäß den wesentlichen Vorteil, dass ein Eindringen von Abgasen in den Innenbereich des Ventilkörpers vermieden oder zumindest die Menge des eindringenden Mediums erheblich reduziert ist. Hierdurch ist ein erheblicher Funktionsnachteil, wie ein mit sich bringendes Verkleben oder Verlacken in diesem Bereich vermieden.

Bei dem als abschaltbares Rückschlagventil ausgebildeten Ventil ist der Ventilkörper von einem insbesondere deckel- oder topfförmig ausgebildeten Verschlusselement zumindest teilweise umgeben. Das Verschlusselement ist derart ausgebildet, dass es in einer Abschalt-Stellung an dem Ventilsitz anliegt und somit die Ventilöffnung verschließt

Das Verschlusselement ist mit dem stößel- oder stabförmigen Betätigungselement verbunden. Hierbei kann zum Überführen des Ventils in die Offen-Stellung der Ventilkörper zusammen mit dem Verschlusselement bewegt, insbesondere verschoben werden. Ferner ist es möglich, zum Überführen des Ventils in die Offen-Stellung nur das Verschlusselement zu bewegen und hierdurch den Ventilkörper freizugeben. Der freigegebene Ventilkörper wird sodann auf Grund anliegenden Drucks beispielsweise durch elastische Verformung geöffnet und dient somit gleichzeitig als Rückschlagelement.

Vorzugsweise ist innerhalb des Verschlusselements der Ventilkörper angeordnet. Hierdurch ist es möglich, den Ventilkörper aus einem Material herzustellen, das gute Verformungseigenschaften aufweist und somit beim Fördern von Medium durch das Ventil gleichzeitig als Rückschlagelement dient.

Insbesondere ist es vorteilhaft, dass das Material unabhängig davon, ob ein Anhaften in der Geschlossen-Stellung auftreten würde, gewählt werden kann. Insbesondere kann der Ventilkörper als Teflonscheibe ausgebildet werden. Zusätzlich ist es möglich, das Verschlusselement aus einem Material zu wählen, bei dem aufgrund der Materialeigenschaften ein Anhaften vermieden ist, da das Material des Verschlusselementes beispielsweise nicht elastisch sein muss, da es nicht als Rückschlagelement dient.

Das Verschlusselement wird zur Freigabe der Ventilöffnung bewegt, insbesondere verschoben. Das Verschieben des Verschlusselements kann hierbei elektrisch und/oder pneumatisch erfolgen. Besonders bevorzugt ist es hierbei, das Bewegen/Verschieben des Verschlusselements durch Unterdruck hervorzurufen. Hierzu ist das Verschlusselement vorzugsweise mit einer Unterdruckkammer verbunden, so dass durch Anlegen eines Unterdrucks ein Bewegen des Verschlusselements, insbesondere in die Offen-Stellung, erfolgt. Die Verbindung des Verschlusselements mit der Unterdruckkammer kann fluidisch, über einen Stößel, einen Kolben, eine Membran o. dgl. erfolgen.

In einer besonders bevorzugten Ausführungsform weist das Zusatzelement eine weitere dritte Dichtlippe auf. Diese insbesondere rahmen- oder ringförmig ausgebildete dritte Dichtlippe bewirkt ein Abdichten gegenüber dem Gehäuse und ist in Richtung der Frischluftzufuhrseite, d. h. in Richtung des Einlasses gerichtet. Durch diese dritte Dichtlippe ist ein Eindringen von Frischluft in dem Bereich des Ventils vermieden, bzw. stark verringert. Auch hierdurch könnten Funktionsstörungen auftreten. Insbesondere weist das Gehäuse bzw. dieser Teil des Gehäuses einen Ansatz auf, der den Stößelring insbesondere ring- bzw. hülsenförmig umgibt. Vorzugsweise liegt die in Richtung der Frischluftseite weisende dritte Dichtlippe an diesem Ansatz an.

Das Dichtelement und/ oder das Zusatzdichtelement weisen in bevorzugter Ausführungsform Kernelemente, die vorzugsweise ringförmig ausgebildet sind, aus stabilem Material auf. Vorzugsweise sind somit Dichtelemente mit insbesondere integrierten, von Kunststoff umgebenden Versteifungselementen vorgesehen.

Um in der Geschlossen-Stellung ein zuverlässiges Schließen des Ventils zu gewährleisten, kann durch das Vorsehen eines Andrück- bzw. Federelements in der Geschlossen-Stellung der Ventilkörper gegen das Dichtelement, insbesondere die Dichtlippen gedrückt werden. Bei dem Andrück- bzw. Federelement handelt es sich insbesondere um eine beispielsweise spiralförmig ausgebildete Feder. Diese kann in bevorzugter Ausführungsform innerhalb des Verschlusselementes angeordnet sein, insbesondere das Betätigungselement umgeben. Das Verschlusselement dient somit als Widerlager des Andrück- bzw. Federelements in der Geschlossen-Stellung.

Nachfolgend wir die Erfindung anhand bevorzugter Ausführungsformen unter Bezugnahme auf die anliegende Zeichnung näher erläutert.

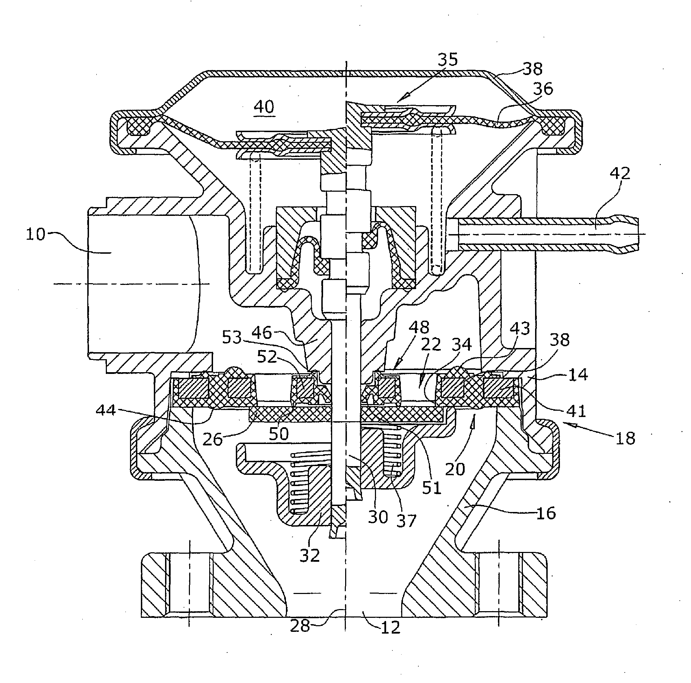

- Fig. 1: zeigt eine schematische Schnittansicht einer bevorzugten Ausführungsform des erfindungsgemäßen Kraftfahrzeugventils.

Bei der dargestellten Ausführungsform des Kraftfahrzeugventils handelt es sich insbesondere um ein Abgasrückführventil. Hierbei ist das Ventil in der linken Hälfte der Figur in Offen-Stellung und in der rechten Hälfte der Figur in Geschlossen-Stellung dargestellt.

Das Ventil weist einen Einlass 10 sowie einen Auslass 12 auf, die in einem im Wesentlichen aus zwei Teilen 14,16 bestehende Gehäuse 18 angeordnet sind. Zwischen den beiden Gehäuseteilen 14,16 ist ein ringförmiges, den Ventilsitz ausbildendes Bauteil angeordnet. Der Ventilsitz weist eine im dargestellten Ausführungsbeispiel kreisringförmige Ventilöffnung 22 auf. An einem Dichtelement 20 liegt in der Offen-Stellung (linke Seite in Fig. 1) ein Ventilkörper 26 an.

Im dargestellten Ausführungsbeispiel ist der Ventilkörper 26 nicht fest an einem entlang einer Ventilmittellinie 28 verschiebbaren Stößel 30, der ein Betätigungselement bildet, verbunden, sondern verschiebbar gehalten. Ferner ist im dargestellten Ausführungsbeispiel mit dem Stößel 30 auf der Seite der Auslassöffnung 12 ein topfförmiges Verschlusselement 32 fest verbunden. Auf der gegenüberliegenden Seite des Stößels 30 ist dieser mit einen tellerförmigen Element 35 verbunden. Das tellerförmige Element 35 ist über ein scheibenförmiges, elastisches Element 36 mit dem Gehäuseteil 16 verbunden. Die Verbindung erfolgt über einen am Rand umgebördelten Deckel 38. Das Element 36 ist gasundurchlässig. Das mit dem Stößel 30 verbundene tellerförmige Element 35 ist in einem Hohlraum 40 angeordnet. Der Hohlraum 40 ist über ein Anschlusselement 42 mit einer Unterdruckquelle verbunden, Durch Anlegen von Unterdruck an das Anschlusselement 42 erfolgt ein Bewegen des Stößels aus der in Fig. 1 rechts dargestellten Geschlossen-Stellung in die in Fig. 1 links dargestellte Offen-Stellung. Hierdurch erfolgt ein Verschieben des Verschlusselements 32 zusammen mit dem Stößel 30 in die Offen-Stellung,

Das als Ventilsitz ausgebildete erste Dichtelement 20 weist eine im dargestellten Ausführungsbeispiel kreisringförmig ausgebildete Dichtlippe 34 auf, die in einem Außenbereich des Ventilkörpers 26 anliegt. In der Geschlossen-Stellung (rechte Seite) ist somit ein dichtendes Schließen der Ventilöffnung 22 gewährleistet, wobei gleichzeitig auf Grund des erfindungsgemäßen Vorsehens einer Dichtlippe 34 nur eine geringe, insbesondere linienförmige Berührung zwischen dem Dichtelement 20 und dem Ventilkörper 26 erfolgt, so dass ein Anhaften auch bei längeren Verweilzeiten des Ventils in Geschlossen-Stellung vermieden ist.

Um ein sicheres Abdichten in der Geschlossen-Stellung zu gewährleisten ist eine als Andrückelement dienende Feder 37 innerhalb des topfförmigen Verschlusselements 32 angeordnet. Im dargestellten Ausführungsbeispiel handelt es sich um eine Spiralfeder 37, die den Stößel 30 umgibt und in Geschlossen-Stellung (rechte Seite) gegen die Unterseite des Ventilkörpers 26 drückt.

Das als Ventilkörper ausgebildete Dichtelement 20 ist vorzugsweise aus einem Elastomer hergestellt. Ferner sind in dem Dichtelement 20 vorzugsweise kreisringförmige Kanäle 38, 41 ausgebildet. In den Kanälen 38, 41 kann wie in der Figur schraffiert dargestellt ein Kern aus stabilem Material, beispielsweise aus Aluminium vorgesehen sein. Insbesondere kann eine entsprechende Aluminiumplatte mit Elastomer zur Herstellung des Ventilkörpers umspritzt werden.

Ferner weist das Dichtelement 20 ebenfalls vorzugsweise ringförmig ausgebildete Ansätze 42, 44 auf, die zur Versteifung des Dichtelements 20 dienen. Zusätzlich oder anstelle von Ansätzen können auch Versteifungsrippen vorgesehen sein.

Das Dichtelement 20 ist zwischen den beiden Gehäusehälften 14, 16 angeordnet und zwischen diesen klemmend gehalten.

An einem den Stößel 30 umgebenden Ansatz 46 des Gehäuseteils 14 ist ein Zusatzdichtelement 48 angeordnet. Das Zusatzdichtelement 48 ist kreisringförmig ausgebildet und weist eine ringförmige vierte Dichtlippe 50 auf, die entsprechend der ersten Dichtlippe 34 des Dichtelements 20 ebenfalls an der Oberseite des Ventilkörpers 26 anliegt. Die vierte Dichtlippe 50 sorgt dafür, dass das Rückschlagelement 26 bei Abgaspulsation gegen die vierte Dichtlippe 50 gedrückt wird. Wenn das Ventil nicht in Betrieb ist, liegt das Rückschlag-Dichtelement 26 an der vierte Dichtlippe 50 an und bildet mit diesen einen linienförmigen Kontakt.

Das Zusatzdichtelement 48 weist einen kreisringförmigen als Hohlraum ausgebildeten Kanal 52 auf, in dem ein schraffiert dargestelltes Versteifungselement, das insbesondere Aluminium aufweist, vorgesehen sein kann. Insbesondere ist das Versteifungselement bzw. der Aluminiumring mit einem Elastomer umspritzt.

Ferner weist das Zusatzdichtelement 48 eine zweite Dichtlippe 51 auf. Die zweite Dichtlippe 51 ist ebenfalls ringförmig ausgebildet und liegt dichtend an dem Stößel 30 an. Die zweite Dichtlippe 51 sorgt dafür, dass beim Betrieb des Ventils kein Abgas zur Stangenführung gelangt. Ferner weist das Zusatzdichtelement 48 eine weitere an dem Ansatz 46 anliegende dritte Dichtlippe 53 auf. Die dritte Dichtlippe 53 ist vorzugsweise kreisringförmig ausgebildet und dichtet den Stößel 30 gegenüber feuchter Luft ab. Der Ansatz 46 weist zur Führung des Stößels 30 ein Führungselement auf. Hierbei kann es sich um einen Vorsprung oder eine Nase handeln, die in einen Längsschlitz des Stößels 30 eingreift.

## Patentansprüche

1. Kraftfahrzeug-Abgasrückführ- oder Sekundärluft-Ventil als abschaltbares Rückschlagventil, mit
einem einen Einlass (10) und einen Auslass (12) aufweisenden Ventilgehäuse (18),
einem relativ zu einer Ventilöffnung (22) zwischen einer Offen-Stellung und einer Geschlossen-Stellung bewegbaren Ventilkörper (26),
einem zwischen dem Einlass (10) und dem Auslass (12) angeordneten, die Ventilöffnung (22) aufweisenden Ventilsitz,
einem die Ventilöffnung (22) in der Abschalt-Stellung verschließenden Verschlusselement (32),
einem mit dem Verschlusselement (32) verbundenen stößel- oder stabförmigen Betätigungselement (30) zum Bewegen des Verschlusselements (32) zwischen einer Abschalt-Stellung und einer Offen-Stellung, und
einem Zusatzdichtelement (48), das in einem Innenbereich des Ventilkörpers (26) dichtend anliegt, wobei
das Zusatzdichtelement (48) das Betätigungselement (30) umgibt, **dadurch gekennzeichnet, dass** der Ventilsitz von einem Dichtelement (20) mit einer an dem Ventilkörper (26) anliegenden ersten Dichtlippe (34) gebildet wird und dass das Zusatzdichtelement (48) eine an dem Betätigungselement (30) anliegende zweite Dichtlippe (51) aufweist.

2. Kraftfahrzeug-Abgasrückführ- oder Sekundärluft-Ventil nach Anspruch 1 **dadurch gekennzeichnet, dass** das Zusatzdichtelement (48) eine an dem Gehäuse, insbesondere einem das Verschlusselement (32) umgebenden Ansatz (46) des Gehäuses anliegende dritte Dichtlippe (53) aufweist.

3. Kraftfahrzeug-Abgasrückführ- oder Sekundärluft-Ventil nach Anspruch 1 oder 2, **dadurch gekennzeichnet, dass**
das Zusatzdichtelement (48) eine am Ventilkörper (26) anliegende vierte Dichtlippe (50) aufweist.

4. Kraftfahrzeug-Abgasrückführ- oder Sekundärluft-Ventil nach einem der Ansprüche 1 - 3, **dadurch gekennzeichnet, dass** das Dichtelement (20) aus einem elastomeren Material besteht.

5. Kraftfahrzeug-Abgasrückführ- oder Sekundärluft-Ventil nach einem der Ansprüche 1-4, **dadurch gekennzeichnet, dass** das Dichtelement (20) in einem Außenbereich des Ventilkörpers (26) anliegt.

6. Kraftfahrzeug-Abgasrückführ- oder Sekundärluft-Ventil nach einem der Ansprüche 1 - 5, **gekennzeichnet durch** ein insbesondere elastisch verformbares Andrückelement (37) zum Andrücken des Ventilkörpers (26) an mindestens eine Dichtlippe (34, 50) in Geschlossen-Stellung des Ventilkörpers (26).

7. Kraftfahrzeug-Abgasrückführ- oder Sekundärluft-Ventil nach Anspruch 6, **dadurch gekennzeichnet, dass** sich das Andrückelement (37) an dem Verschlusselement (32) abstützt.

8. Kraftfahrzeug-Abgasrückführ- oder Sekundärluft-Ventil nach Anspruch 7, **dadurch gekennzeichnet, dass** das Andrückelement (37) innerhalb des Verschlusselements (32) angeordnet ist.

## Claims

1. Vehicle exhaust gas recirculation or secondary air valve as a deactivatable check valve, comprising
a valve housing (18) having an inlet (10) and an outlet (12),
a valve body (26) movable between an open position and a closed position with respect to a valve opening (22),
a valve spat arranged between the inlet (10) and the outlet (12) comprising the valve opening (22),
a closure element (32) closing the valve opening (22) in the deactivated position,
a plunger- or rod-shaped actuator element (30) connected to the closure element (32), said actuator element being provided for moving the closure element (32) between a deactivated position and an open position, and
an additional sealing element (48) in sealing abutment against an inner portion of the valve body (26), wherein
the additional sealing element (48) surrounds said actuator element (30), **characterized in that** the valve seat is formed by a sealing element (20) with a first sealing lip (34) abutting the valve body (26), and **in that** the additional sealing element (48) comprises a second sealing lip (51) abutting the actuating element (30).

2. Vehicle exhaust gas recirculation or secondary air valve of claim 1, **characterized in that** the additional sealing element (48) comprises a third sealing lip (53) abutting the housing, in particular a projection (46) of the housing surrounding the closure element (32).

3. Vehicle exhaust gas recirculation or secondary air valve of claim 1 or 2, **characterized in that** the additional sealing element (48) has a fourth sealing lip (50) abutting the valve body (26).

4. Vehicle exhaust gas recirculation or secondary air valve of one of dams 1 - 3, characterize in that the sealing element (20) is made from an elastomeric material.

5. Vehicle exhaust gas recirculation or secondary air valve of one of claims 1 - 4, **characterized in that** the sealing element (20) abuts an outer portion of the valve body (26).

6. Vehicle exhaust gas recirculation or secondary air valve of one of claims 1 - 5, **characterized by** a pressing element (37), in particular an elastically deformable pressing element, for pressing the valve body (26) against at least one sealing lip (34, 50) in the closed position of the valve body (26).

7. Vehicle exhaust gas recirculation or secondary air valve of claim 4, **characterized in that** the pressing element (37) is supported on the closure element (32).

8. Vehicle exhaust gas recirculation or secondary air valve of claim 7, **characterized in that** the pressing element (37) is arranged within the closure element (32).

## Revendications

1. Soupape de récirculation de gaz d'échappement ou d'air secondaire comme Soupape de retenue, destinée à l'utilisation dans une voiture automobile, comprenant
un boitier de soupape (18) avec une entrée (10) et une sortie (12),
un corps de soupape (26) déplaçable entre une position ouverte et une position fermée par rapport à une ouverture de soupape (22),
un siège de soupape prévue entre ladite entrée (10) et ladite sortie (12), comprenant ladite ouverture de soupape (22),
un élément de fermeture (32) fermant ladite ouverture de soupape (22) dans la position de désactivation,
un élément actionneur (30) en forme de poussoir ou de bâton, connecté audit élément de fermeture (32), pour déplacer ledit élément de fermeture (32) entre une position de désactivation et une position ouverte, et
un élément d'étanchéité auxiliaire (48) en contact étanchéifiant dans une partie intérieure dudit corps de soupape (26),
ledit élément d'étanchéité auxiliaire (48) entourant ledit élément actionneur (30), **caractérisée en ce que** ladite siège de soupape est formée par un élément d'étanchéité (20) avec une première lèvre d'étanchéité (34) en contact avec ledit corps de soupape (26), et que ledit élément d'étanchéité auxiliaire (48) comprend une deuxième lèvre d'étanchéité (51) en contact avec ledit élément actionneur (30).

2. Soupape de récirculation de gaz d'échappement ou d'air secondaire de voiture automobile selon la revendication 1, **caractérisée en ce que** ledit élément d'étanchéité auxiliaire (48) comprend une troisième lèvre d'étanchéité (53) en contact avec ledit boitier, notamment en contact avec une saillie (46) du boîtier entourant ledit élément de fermeture (32).

3. Soupape de récirculation de gaz d'échappement ou d'air secondaire de voiture automobile selon les revendications 1 ou 2, **caractérisée en ce que** ledit élément d'étanchéité auxiliaire (48) comprend une quatrième lèvre d'étanchéité (50) en contact avec ledit corps de soupape (26).

4. Soupape de récirculation de gaz d'échappement ou d'air secondaire de voiture automobile selon l'une quelconque des revendications 1-3, **caractérisée en ce que** ledit élément d'étanchéité (20) est fabriqué d'une matière élastomère.

5. Soupape de récirculation de gaz d'échappement ou d'air secondaire de voiture automobile selon l'une des revendications 1 - 4, **caractérisée en ce que** ledit élément d'étanchéité (20) est en contact avec une partie extérieure dudit corps de soupape (26).

6. Soupape de récirculation de gaz d'échappement ou d'air secondaire de voiture automobile selon l'une des revendications 1-5, **caractérisée par** un élément de pression (37), notamment du type élastiquement déformable, pour presser ledit corps de soupape (26) contre au moins une lèvre d'étanchéité (34, 50) dans la position fermée dudit corps de soupape (26).

7. Soupape de récirculation de gaz d'échappement ou d'air secondaire de voiture automobile selon la revendication 6, **caractérisée en ce que** ledit élément de pression (37) est supporté sur ledit élément de fermeture (32).

8. Soupape de récirculation de gaz d'échappement ou d'air secondaire de voiture automobile selon la revendication 7, **caractérisée en ce que** ledit élément de pression (37) est disposé dans ledit élément de fermeture (32).
